# EUROPEAN PATENT APPLICATION

(11) **EP 4 796 218 A1**
(43) Date of publication of application: **26.08.2026**
(21) Application number: 24897794.4
(22) Date of filing: 29.07.2024
(51) Int. Cl.: B01J 37/00, B01J 37/08, B01J 35/61, B01J 35/40, B01J 21/08, B01J 23/755

(54) **POROUS CATALYST FOR PRODUCING SYNTHESIZED GAS AND METHOD FOR PREPARING SAME**

(30) Priority: 28.11.2023 KR 20230167582
(71) Applicant: SK Innovation Co., Ltd., Seoul 03188 (KR)
(72) Inventor: JEON, Heejung, Daejeon 34124 (KR); SON, Sungreal, Daejeon 34124 (KR); YU, Seunghan, Daejeon 34124 (KR); JEONG, Yongseong, Daejeon 34124 (KR)
(74) Representative: Lorenz Seidler Gossel Part. mbB
(86) International application number: PCT/KR2024/011003
(87) International publication number: WO 2025/116193

(57) **Abstract**

The present disclosure relates to a method for preparing a porous catalyst for the production of a pyrolytically synthesized gas, the method comprising the steps of: mixing a metal precursor including a Group VIIIA element, a ceramic support, and a solvent to prepare a mixed solution; adding an acid to the mixed solution to prepare a precursor gel; mixing the precursor gel with clay to prepare a mixture; adding an inorganic binder to the mixture to prepare a composite catalyst sol; and drying and calcining the composite catalyst sol.

## Description

### [Technical Field]

The present disclosure relates to a catalyst used in a process for converting a mixed gas recovered in a waste gasification process into syngas. Specifically, the present disclosure provides a catalyst for reaction suitable for a methane reforming reaction process and a reverse Boudouard reaction process, thereby maximizing the yield of syngas produced from pyrolysis gas.

The catalyst of the present disclosure reduces loss of syngas due to side reactions, thereby maximizing the yield of syngas in a waste gasification process.

### [Background Art]

Organic waste may seriously damage the environment by decay when landfilled; therefore, it should be collected according to its characteristics and disposed of through prescribed treatment processes. However, simply disposing of organic waste requires securing treatment facilities and consumes substantial manpower, and is regarded as more wasteful than productive; accordingly, in recent years, methods and technologies for recycling organic waste have been developed. Representative examples include gasification process technologies that produce syngas from organic waste and convert the syngas into high value-added products for energy recovery.

A gasification process generally refers to a series of processes in which a carbonaceous feedstock, such as coal, organic waste, or biomass, is reacted in the presence of steam, oxygen, carbon dioxide, or a mixture thereof to convert the feedstock into syngas containing hydrogen and carbon monoxide. As used herein, "syngas" generally refers to a mixed gas that is typically produced by a gasification reaction and contains hydrogen and carbon monoxide, and may further include dry gases such as carbon dioxide and/or methane.

Gasification process technologies have been expanded to technologies for producing feedstocks and fuels for various compounds. For example, syngas may be used as a feedstock for a Fischer-Tropsch synthesis reaction to produce high value-added products such as light oil, heavy oil, diesel oil, wax, jet fuel, and lubricating base oil. In addition, hydrogen in syngas, which is a main product of a gasification process, may be used for hydrogen power generation, ammonia production, refinery processes, and the like. In addition, it is also known that methanol produced from syngas may be used to obtain high value-added chemical materials such as acetic acid, olefins, dimethyl ether, aldehydes, fuels, and additives. However, syngas produced from organic waste has a significantly low production yield, making it difficult to effectively produce high value-added compounds from the syngas.

In recent years, a gasification process using a catalyst has been employed as a process for producing syngas; however, coke formation in the gasification process deactivates the catalyst, thereby causing process troubles during continuous operation due to the deactivated catalyst. In addition, in order to ensure cost-effectiveness, a relatively expensive catalyst needs to be recovered; however, to recover the catalyst discharged in an agglomerated state with coke and the like, a number of subsequent processes (such as air burning) should be performed, resulting in a significant decrease in process efficiency.

For example, a steam reforming catalyst used in a conventional gasification process and containing a noble-metal active metal species such as Ru does not readily lead to carbon deposition even under a low S/C (steam-to-carbon ratio) condition; however, the catalyst is readily sulfur-poisoned by sulfur components contained in the feedstock, such that catalytic activity deteriorates in a short time, and the sulfur-poisoned catalyst has a drawback in that it causes carbon deposition. In addition, since the noble metal is expensive, there is a problem in that the cost-effectiveness of the process is reduced.

Meanwhile, the steam reforming reaction is a high-temperature reaction, and as a high-temperature endothermic reaction occurring during the reforming process and a regeneration process performed downstream of the reactor, in which coke formed on the catalyst surface is removed through oxidation to regenerate the catalyst, are repeated, fracture of the catalyst is caused. For this reason, α-alumina having relatively high crush strength is generally used as a support material. However, in general, in order to increase the strength of α-alumina, α-alumina is calcined at a high temperature during its production, and thus the BET specific surface area and the pore volume are extremely small. Accordingly, an active metal species supported on α-alumina is readily sintered by thermal exposure, resulting in deterioration of catalytic activity.

In this respect, there is a need to develop a catalyst that is inexpensive, has excellent durability sufficient to maintain strength without being pulverized or fractured even when coking occurs inside the catalyst, and also has a high specific surface area and thus exhibits excellent reaction activity and reaction stability.

In addition, there remains a need to develop a catalyst for producing hydrocarbons that may convert a mixed gas into high value-added hydrocarbons with high efficiency and minimize the formation of carbon dioxide in a hydrocarbon production process by improving the yield of syngas obtained through a gasification reaction.

### [Disclosure]

### [Technical Problem]

An object of the present disclosure is to provide a catalyst for producing pyrolysis syngas having excellent catalytic activity and high durability, and a method for producing the same.

Another object of the present disclosure is to provide a catalyst for producing pyrolysis syngas having high reaction stability, and a method for producing the same.

Still another object of the present disclosure is to provide a catalyst for producing pyrolysis syngas and a method for producing the same that may further improve a production yield of carbon monoxide and carbon monoxide conversion using pyrolysis gas.

### [Technical Solution]

In one general aspect, a method for producing a porous catalyst for producing pyrolysis syngas includes: preparing a mixed solution by mixing a metal precursor containing a Group VIIIA element, a ceramic support, and a solvent; preparing a precursor gel by adding an acid to the mixed solution; preparing a mixture by mixing clay with the precursor gel; preparing a composite catalyst sol by adding an inorganic binder to the mixture; and drying and calcining the composite catalyst sol.

In an embodiment, the catalyst may be used as a steam reforming catalyst and a catalyst for a reverse Boudouard process in a syngas production process through hydrocarbon decomposition.

In an embodiment, the Group VIIIA element may include nickel, iron, cobalt, ruthenium, palladium, platinum, or a mixture thereof.

In an embodiment, the metal precursor may be one or more selected from a hydroxide, a sulfate, a carbonate, a nitrate, a chloride, benzoic acid, a basic carbonate, a formate, citric acid, diammonium sulfate, and hydrates thereof of a Group VIIIA element.

In an embodiment, the ceramic support may contain pseudo-boehmite.

In an embodiment, the acid may be one or more selected from organic acids including formic acid, acetic acid, propionic acid, and salicylic acid.

In an embodiment, the calcining may be performed at a temperature of 500°C to 1,300°C.

In another general aspect, there is provided a porous catalyst for producing pyrolysis syngas, the porous catalyst being produced by the production method described above.

In an embodiment, the catalyst may contain 5 to 70 wt% of a ceramic support, 0.1 to 75 wt% of a Group VIIIA element, and 0.1 to 30 wt% of clay.

In an embodiment, the catalyst may have a pore volume of 0.01 cc/g to 0.5 cc/g.

In an embodiment, the catalyst may have an average pore diameter of 300 Å or less.

In an embodiment, the Group VIIIA element may be present as fine particles, and the fine particles may have an average particle diameter of 1 nm to 20 nm.

In an embodiment, the catalyst may have a BET specific surface area of 10 m²/g to 300 m²/g.

In an embodiment, the catalyst may have an attrition loss index of 15 wt% or less.

In an embodiment, the catalyst may further contain 0 to 30 wt% of silica.

In an embodiment, the catalyst may have an average particle diameter (D50) of 10 µm to 500 µm.

In an embodiment, the catalyst may be a catalyst for a steam reforming reaction and a reverse Boudouard reaction for producing syngas from hydrocarbons.

### [Advantageous Effects]

According to an embodiment of the present disclosure, it is possible to provide a method for producing a porous catalyst for producing pyrolysis syngas having excellent catalytic activity and high durability.

According to an embodiment of the present disclosure, it is possible to provide a method for producing a catalyst for producing pyrolysis syngas having high reaction stability by minimizing occurrence of catalyst fracture due to coke formation.

According to an embodiment of the present disclosure, syngas may be produced from pyrolysis gas with a high conversion and a high yield using a catalyst for producing pyrolysis syngas produced by the production method of the present disclosure.

### [Description of Drawings]

FIG. 1 is a flowchart illustrating a method for producing a catalyst for producing pyrolysis syngas according to an embodiment.
FIG. 2 is a schematic view illustrating a catalyst for producing pyrolysis syngas according to an embodiment.

### [Best Mode]

Hereinafter, a porous catalyst for producing pyrolysis syngas according to the present disclosure and a method for producing the same will be described in detail. The terms used herein have been selected from among general terms that are currently widely used, while taking into consideration the functions of the present disclosure; however, the terms may have different meanings depending on the intention of those skilled in the art, precedents, the emergence of new technologies, and the like. Unless otherwise defined, technical and scientific terms used herein may have the meanings commonly understood by those skilled in the art to which the present disclosure pertains.

As used herein and in the appended claims, the terms "comprise(s)", "include(s)", "have(has)", and the like indicate the presence of stated features or components as described herein, and unless otherwise specified, do not preclude the addition of one or more other features or components.

As used herein and in the appended claims, singular forms include plural forms unless the context clearly indicates otherwise. In addition, plural forms include singular forms unless the context clearly indicates otherwise.

As used herein and in the appended claims, the terms "first", "second", and the like are used not in a limiting sense, but are used to distinguish one component from another.

In addition, a numerical range used herein includes upper and lower limits and all values therebetween, increments logically derived from the form and width of the defined range, all values defined by double limitations, and all possible combinations of the upper and lower limits of numerical ranges defined in different forms. Unless otherwise specifically defined in the specification of the present invention, values outside the numerical range that may occur due to experimental errors or rounding are also included within the defined numerical range.

As used herein and in the appended claims, terms of degree such as "about" are used to encompass an allowable error when such an allowable error exists.

As used herein and in the appended claims, the term "Group VIIIA" refers to elements belonging to the corresponding group in the periodic table according to the former International Union of Pure and Applied Chemistry (IUPAC) classification.

Hereinafter, a method for producing a porous catalyst for producing pyrolysis syngas according to the present disclosure will be described with reference to the accompanying drawings.

Organic waste may seriously damage the environment by decay when landfilled; therefore, it should be collected according to its characteristics and disposed of through prescribed treatment processes. However, simply disposing of organic waste requires securing treatment facilities and consumes substantial manpower, and is regarded as more wasteful than productive; accordingly, in recent years, methods and technologies for recycling organic waste have been developed. Representative examples include gasification process technologies that produce syngas from organic waste and convert the syngas into high value-added products for energy recovery.

A gasification process generally refers to a series of processes in which a carbonaceous feedstock, such as coal, organic waste, or biomass, is reacted in the presence of steam, oxygen, carbon dioxide, or a mixture thereof to convert the feedstock into syngas containing hydrogen and carbon monoxide. As used herein, "syngas" generally refers to a mixed gas that is typically produced by a gasification reaction and contains hydrogen and carbon monoxide, and may further include dry gases such as carbon dioxide and/or methane.

Gasification process technologies have been expanded to technologies for producing feedstocks and fuels for various compounds. For example, syngas may be used as a feedstock for a Fischer-Tropsch synthesis reaction to produce high value-added products such as light oil, heavy oil, diesel oil, wax, jet fuel, and lubricating base oil. In addition, hydrogen in syngas, which is a main product of a gasification process, may be used for hydrogen power generation, ammonia production, refinery processes, and the like. In addition, it is also known that methanol produced from syngas may be used to obtain high value-added chemical materials such as acetic acid, olefins, dimethyl ether, aldehydes, fuels, and additives. However, syngas produced from organic waste has a significantly low production yield, making it difficult to effectively produce high value-added compounds from the syngas.

In recent years, a gasification process using a catalyst has been employed as a process for producing syngas; however, coke formation in the gasification process deactivates the catalyst, thereby causing process troubles during continuous operation due to the deactivated catalyst. In addition, in order to ensure cost-effectiveness, a relatively expensive catalyst needs to be recovered; however, to recover the catalyst discharged in an agglomerated state with coke and the like, a number of subsequent processes (such as air burning) should be performed, resulting in a significant decrease in process efficiency.

For example, a steam reforming catalyst used in a conventional gasification process and containing, as an active metal species, a noble-metal active metal species such as Ru does not readily lead to carbon deposition even under a low S/C (steam-to-carbon ratio) condition; however, the catalyst is readily sulfur-poisoned by sulfur components contained in the feedstock, such that catalytic activity deteriorates in a short time, and the sulfur-poisoned catalyst has a drawback in that it causes carbon deposition. In addition, since the noble metal is expensive, there is a problem in that the cost-effectiveness of the process is reduced.

In addition, a catalyst having a non-noble-metal active metal species containing Ni and the like is relatively likely to cause carbon deposition, and thus needs to be used under conditions of a high steam-to-carbon ratio in which steam is used in excess of the theoretical composition; accordingly, operation becomes complicated, and there is a problem in that steam consumption per unit product increases. In addition, the range of conditions under which the system may be continuously operated is narrow, and an expensive control system is required to achieve continuous operation; moreover, because the entire system becomes very complicated, it is not cost-effective in terms of manufacturing cost and maintenance.

Meanwhile, the steam reforming reaction is a high-temperature reaction, and as a high-temperature endothermic reaction occurring during the reforming process and a regeneration process performed downstream of the reactor, in which coke formed on the catalyst surface is removed through oxidation to regenerate the catalyst, are repeated, fracture of the catalyst is caused. For this reason, α-alumina having relatively high crush strength is generally used as a support material. However, in general, in order to increase the strength of α-alumina, α-alumina is calcined at a high temperature during its production, and thus the BET specific surface area and the pore volume are extremely small. Accordingly, an active metal species supported on α-alumina is readily sintered by thermal exposure, resulting in deterioration of catalytic activity.

Accordingly, the present applicant has invented a method for producing a porous catalyst for producing pyrolysis syngas, which provides a catalyst that is highly cost-effective, has excellent durability sufficient to maintain strength without being pulverized or fractured even when coking occurs inside the catalyst, and also has a high specific surface area and thus exhibits excellent reaction activity and reaction stability.

A method for producing a porous catalyst for producing pyrolysis syngas according to the present disclosure includes: preparing a mixed solution by mixing a metal precursor containing a Group VIIIA element, a ceramic support, and a solvent; preparing a precursor gel by adding an acid to the mixed solution; preparing a mixture by mixing clay with the precursor gel; preparing a composite catalyst sol by adding an inorganic binder to the mixture; and drying and calcining the composite catalyst sol.

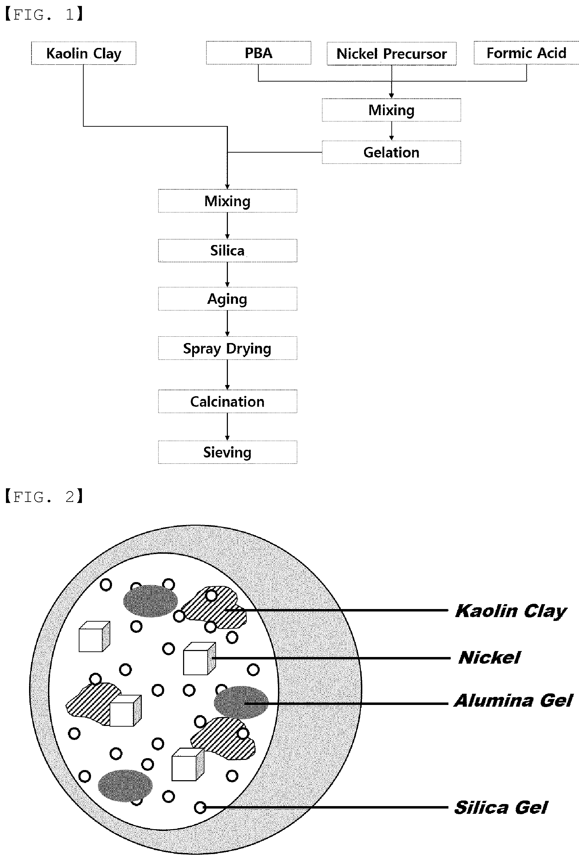

That is, as illustrated in FIG. 1, the porous catalyst for producing pyrolysis syngas according to the present disclosure is produced through a series of processes of preparing an aqueous mixed solution by mixing a metal precursor containing a Group VIIIA element with a ceramic support, adding an organic acid to the mixed solution to perform gelation to prepare a precursor gel, sequentially adding clay and an inorganic binder to prepare a composite catalyst sol, and drying and calcining the composite catalyst sol. Accordingly, durability is improved, such that the occurrence of cracking and fracture of the catalyst is significantly reduced even when coke is deposited inside the catalyst, and, as the Group VIIIA element, which is an active metal, is uniformly dispersed throughout the ceramic support, excellent reaction activity may be provided.

Accordingly, when the catalyst produced by the production method according to the present disclosure is applied to a dual circulating fluidized-bed process, coking and regeneration may be repeated without breakage of the catalyst, and thus syngas may be obtained with a high yield without catalyst deactivation even during long-term operation.

When an organic acid is added to the mixed solution containing the metal precursor, the ceramic support, and the solvent, a precursor gel may be formed through complexation between the metal precursor and the ceramic support.

In a specific embodiment, in preparing the precursor gel, gelation may be induced by stirring the mixed solution to which the organic acid is added for 1 hour to 10 hours, 1 hour to 8 hours, or 2 hours to 5 hours, thereby providing a reaction time sufficient for the metal precursor and the ceramic support to be sufficiently complexed and converted into a gel form.

In an embodiment, the ceramic support may contain aluminum, and the aluminum-containing ceramic support may contain one or more selected from the group consisting of boehmite, pseudo-boehmite, aluminum alkoxide, aluminum nitride (aluminum nitrate), aluminum fluoride, aluminum phosphate, aluminum chloride, and aluminum sulfate. Specifically, it is advantageous that the ceramic support contains pseudo-boehmite, in that it may provide sufficient strength to minimize fracture of the catalyst due to repeated contraction and expansion of the reactor caused by external heating during the steam reforming reaction described below, while also providing an excellent specific surface area.

In an embodiment, the Group VIIIA element may be a metal including nickel, iron, cobalt, ruthenium, palladium, platinum, or a mixture thereof, and more specifically, the Group VIIIA element may include nickel having excellent cost-effectiveness and excellent catalytic activity.

In an embodiment, the metal precursor may be one or more selected from the group consisting of a hydroxide, a sulfate, a carbonate, a nitrate, a chloride, benzoic acid, a basic carbonate, a formate, citric acid, diammonium sulfate, and hydrates thereof of a Group VIIIA element.

In a more specific example, when the Group VIIIA element includes nickel, the metal precursor may include one or more selected from the group consisting of nickel hydroxide, nickel sulfate, nickel carbonate, nickel nitrate, nickel chloride, nickel benzoate, basic nickel carbonate, nickel formate, nickel citrate, nickel sulfate, diammonium nickel, and hydrates thereof; however, the present disclosure is not limited by the specific type of the metal precursor.

In an embodiment, the organic acid may include formic acid, acetic acid, propionic acid, and salicylic acid, but is not limited thereto.

In an embodiment, after the gelation is completed, clay may be mixed with the precursor gel to prepare a mixture. Since the ceramic support and the metal precursor are mixed in advance and gelated, and then clay is added and mixed, the clay may be uniformly dispersed in the precursor gel without being agglomerated. Accordingly, in the produced catalyst, the metal precursor may be uniformly dispersed in the ceramic support. In addition, as the specific surface area and attrition resistance of the catalyst are improved, long-term stability and catalyst lifetime are improved, and an effect of improving catalytic activity may be provided.

In a specific embodiment, the clay may include kaolin, montmorillonite, bentonite, smectite, illite, vermiculite, or a combination thereof; however, the present disclosure is not limited thereto.

In an embodiment, a composite catalyst sol may be prepared by adding an inorganic binder to the mixture. The inorganic binder may increase adhesion between the metal precursor and the ceramic support, thereby further improving durability and attrition resistance of the produced catalyst. The inorganic binder may include, for example, non-rehydratable alumina, α-alumina, an aluminum salt, silica, clay, talc, bentonite, zeolite, cordierite, titania, an alkali metal salt, an alkaline earth metal salt, a rare earth metal salt, zirconia, mullite, sepiolite, montmorillonite, halloysite, saponite, stevensite, hectorite, silica-alumina, or a combination thereof.

In an embodiment, in preparing the composite catalyst sol, an additive may be further added to the mixture. The additive may include, for example, one or two or more selected from a forming aid and a dispersant. The additive may remain in the finally produced catalyst, or may be burned off by calcination so as not to remain in the catalyst.

The dispersant may be added to improve dispersibility of particles included in the composite catalyst sol and to promote a reaction. More specifically, the dispersant may include one or more selected from the group consisting of ammonium polycarboxylate (polycarboxylic acid ammonium salt), ammonium citrate, trisodium citrate, citric acid, ammonia, acetic acid, nitric acid, hydrochloric acid, and sulfuric acid.

The forming aid may include one or more selected from the group consisting of a fatty acid, cellulose, polyvinyl alcohol, starch, methylcellulose, maltose, and carboxymethylcellulose, and, if necessary, two or more thereof may be used in combination; however, the present disclosure is not limited by the specific type of the additive, and various additives commonly known in the art may be appropriately selected and used by those skilled in the art as needed.

As a non-limiting example, in preparing the composite catalyst sol, an additional solvent may be added as needed to promote dispersion of the inorganic binder and the clay.

By drying and calcining the composite catalyst sol, the metal precursor may be oxidized and, at the same time, a catalyst having a size and a shape capable of optimizing catalytic activity may be produced. Specifically, the drying may be performed by drying the composite catalyst sol using a method known in the art; however, when spray drying is performed using a spray dryer, solvent removal and catalyst shaping are facilitated, and a time during which the catalyst is exposed to heat may be reduced.

In an embodiment, a calcining temperature may be 500°C to 1,300°C, 500°C to 1,100°C, or 500°C to 900°C. By calcining the composite catalyst sol within the above temperature range, the solvent included in the mixture may be rapidly removed, and the metal precursor may be oxidized.

In an embodiment, from the dried catalyst, particles having an average particle diameter of 10 µm to 400 µm, 30 µm to 350 µm, or 50 µm to 250 µm may be selected, thereby obtaining a catalyst having excellent specific surface area and durability.

The present disclosure includes a porous catalyst for producing pyrolysis syngas produced by the method described above. In describing the porous catalyst for producing pyrolysis syngas according to the present disclosure, since the metal precursor, the ceramic support, the clay, the inorganic binder, and the like are the same as or similar to those described above, the porous catalyst for producing pyrolysis syngas according to the present disclosure includes all of the foregoing description.

The catalyst produced by the above-described method has high durability and high attrition resistance, and thus may maintain excellent catalytic activity without being fractured even when a catalytic process is repeatedly performed.

In addition, since an active metal is uniformly dispersed inside the ceramic support, when the catalyst is regenerated by removing coke deposited on the catalyst surface during syngas production described below, sintering of the active metal and deterioration of the catalyst due to hot spot formation may be suppressed. Accordingly, irreversible deactivation of the catalyst may be minimized, thereby improving catalyst lifetime, and fracture of the catalyst may be prevented, thereby providing high reaction stability.

The porous catalyst for producing pyrolysis syngas according to the present disclosure may contain 5 to 70 wt% of a ceramic support, 1 to 75 wt% of a Group VIIIA element, and 0.1 to 30 wt% of clay, and may have a pore volume of 0.01 cm³/g to 0.5 cm³/g and an average pore diameter of 300 Å or less.

The porous catalyst for producing pyrolysis syngas having the above-described characteristics has excellent catalytic activity and a high specific surface area, and has improved durability, such that the catalyst may not fracture even when coking occurs inside the catalyst.

In an embodiment, the Group VIIIA element is supported inside the ceramic support in the form of ultrafine particles, such that an area of contact between the Group VIIIA element, which is an active metal species, and a reactant is increased, thereby providing excellent catalytic activity. More specifically, an average particle diameter of the Group VIIIA element particles may be 1 nm to 20 nm, 1 nm to 15 nm, or 3 nm to 12 nm. When the above range is satisfied, the Group VIIIA element may be readily supported inside the ceramic support, such that high catalytic activity may be maintained.

In an embodiment, the catalyst may contain the Group VIIIA element in an amount of 1 to 75 wt%, 10 to 75 wt%, or 20 to 75 wt%. Since the active metal is uniformly dispersed inside the ceramic support, it is advantageous in that excellent catalytic activity and improved durability may be achieved even when the Group VIIIA element is contained in the above wt% range. When the content of the Group VIIIA element is lower than the above wt% range, there is a risk that hydrocarbon conversion may be reduced.

The porous catalyst for producing pyrolysis syngas according to the present disclosure may contain a high content of the Group VIIIA element, that is, a high content of an active metal. Even when coke is formed on the catalyst during a steam reforming reaction in syngas production, since the catalyst is regenerated in a reverse Boudouard process described below, the catalyst may be used for a long period of time without being deactivated even when the Group VIIIA element is contained in a high content. Accordingly, the porous catalyst for producing pyrolysis syngas according to the present disclosure containing a high content of the Group VIIIA element may maintain high catalytic activity for a long period of time.

In an embodiment, the porous catalyst for producing pyrolysis syngas may contain pseudo-boehmite alumina as a ceramic support, and a content of the pseudo-boehmite alumina in the porous catalyst for producing pyrolysis syngas may be 5 to 70 wt%, 7 to 60 wt%, or 10 to 50 wt%. When the content of alumina is lower than the above wt% range, mechanical strength of the catalyst may be reduced, and when the content of the alumina in the catalyst exceeds the above wt% range, the content of the Group VIIIA element may be reduced, resulting in a reduction in catalytic activity. In producing syngas described below, when the mixed gas contains a high level of nitrogen (N) impurities, it is advantageous in that the ceramic support may adsorb nitrogen components, thereby buffering the suppression of catalytic activity caused by the impurities.

In addition, the porous catalyst for producing pyrolysis syngas may further contain silica, and the silica may be contained in an amount of 0 to 35 wt%, 0 to 30 wt%, or 1 to 25 wt%. The silica is an additive for further improving the attrition resistance of the catalyst. When the above-described attrition loss index value is satisfied with the ceramic support alone, the catalyst may not contain silica. When the content of silica exceeds the above wt% range, catalytic activity may be reduced.

The catalyst according to the present disclosure may contain clay in an amount of 0.1 to 60 wt%, 1 to 50 wt%, or 10 to 30 wt%. The clay may serve as a binder that fixes the Group VIIIA element and the ceramic support, thereby improving the strength of the catalyst. In a specific embodiment, the clay may have an average particle diameter of 30 µm or less, 20 µm or less, or 10 µm or less, and may have, without limitation, an average particle diameter of 0.01 µm or more. Within the above particle diameter range, the clay may improve durability without inhibiting the catalytic activity of the Group VIIIA element.

The catalyst of the present disclosure, as illustrated in FIG. 2, may have a configuration in which a Group VIIIA active metal component, clay, and silica are uniformly dispersed in the ceramic support and are firmly fixed by a clay binder, thereby exhibiting excellent properties such as mechanical strength.

In an embodiment, the porous catalyst for producing pyrolysis syngas may have an attrition loss index of 15 wt% or less, 10 wt% or less, or 5 wt% or less, and may have, without limitation, an attrition loss index of 0.5 wt% or more. The porous catalyst for producing pyrolysis syngas of the present disclosure may exhibit significantly improved attrition resistance, and thus physical or chemical attrition loss due to chemical reactions at a high temperature during a steam reforming reaction and a reverse Boudouard reaction may be significantly reduced, thereby significantly improving long-term catalyst stability.

The porous catalyst for producing pyrolysis syngas of the present disclosure may have a pore diameter of 300 Å or less, 250 Å or less, or 200 Å or less, and may have, without limitation, a pore diameter of 5 Å or more or 10 Å or more. In addition, the catalyst may have a pore volume of 0.01 cc/g to 0.5 cc/g, 0.03 cc/g to 0.4 cc/g, or 0.05 cc/g to 0.3 cc/g, and may have a BET specific surface area of 10 m²/g to 300 m²/g, 20 m²/g to 100 m²/g, or 50 m²/g to 100 m²/g. When the catalyst has the pore volume, the pore diameter, and the BET specific surface area within the above ranges, the active metal may be sufficiently dispersed and supported in the ceramic support, thereby improving catalyst efficiency.

In an embodiment, the catalyst may have an average particle diameter (D50) of 10 µm to 500 µm, 30 µm to 300 µm, or 50 µm to 200 µm. Within the above ranges, the catalyst may have excellent strength and specific surface area; however, the present disclosure is not limited thereto.

The porous catalyst for producing pyrolysis syngas according to the present disclosure may be a steam reforming catalyst and a reverse Boudouard reaction catalyst. As described below, in a process of producing syngas through a gasification reaction of a mixed gas produced by heat-treating organic waste, the porous catalyst may improve the production yields of syngas and hydrocarbons by promoting steam reforming and reverse Boudouard reactions, and may enable syngas to be produced stably for a long period of time due to high durability.

In an embodiment, a method for producing syngas from a pyrolysis mixed gas by using the porous catalyst for producing pyrolysis syngas according to the present disclosure includes: (S1) producing a first mixed gas by heat-treating organic waste; (S2) producing a second mixed gas by steam-reforming the first mixed gas in a first fluidized bed reactor including a catalyst; (S3) separating the second mixed gas into a first stream containing carbon dioxide and a second stream containing hydrogen and carbon monoxide; (S4) introducing the first stream separated in step (S3) into a second fluidized bed reactor including a catalyst and converting the first stream into carbon monoxide through a reverse Boudouard reaction; (S5) producing a third mixed gas by mixing the second stream with the carbon monoxide converted in step (S4); and (S6) producing syngas from the third mixed gas through a water-gas shift reaction, wherein steps (S2) and (S4) may be performed in the presence of the porous catalyst for producing pyrolysis syngas produced by the above-described method.

In an embodiment, in the syngas production method, a mixed gas obtained through heat-treating organic waste may be steam-reformed to produce a mixed reformed gas, and carbon dioxide contained in the mixed reformed gas may be converted into carbon monoxide through a reverse Boudouard reaction. The steam reforming process and the reverse Boudouard reaction may be performed in the presence of the porous catalyst for producing pyrolysis syngas of the present disclosure, such that organic waste may be converted into syngas with high efficiency and a yield of high-value-added hydrocarbons converted from the syngas may be maximized.

In addition, when syngas is produced using the porous catalyst for producing pyrolysis syngas of the present disclosure, it is advantageous in that trace amounts of metal impurities contained in the mixed gas may be adsorbed and removed, a BTX char containing benzene, toluene, and xylene may be converted into coke, and the coke may be used as a carbon source for the reverse Boudouard reaction described below, thereby enabling conversion into carbon monoxide without the need to externally supply a separate carbon source such as activated carbon.

Step (S1) is a step of producing a first mixed gas by heat-treating organic waste, in which a gasification reaction of the organic waste may occur.

In an example, in step (S1), the organic waste may be one or more selected from the group consisting of waste plastics, solid waste, biomass, waste oil, waste tires, and pay-as-you-throw garbage bags. Specifically, in step (S1), one or more gasification reactions selected from the following Reaction Schemes 1 to 4 may be involved.

[Reaction Scheme 1] CₓH_{y} + H₂O → H₂ + CO (water-gasification reaction)

[Reaction Scheme 2] CₓH_{y} + CO₂ → CO (carbon dioxide gasification reaction)

[Reaction Scheme 3] CO + 3H₂ → CH₄ + H₂O (methanation reaction)

[Reaction Scheme 4] CₓH_{y} + O₂→ CO₂ (oxidation reaction)

In an example, the first mixed gas may contain methane, hydrogen, carbon monoxide, and carbon dioxide, and may also contain various impurities such as nitrogen oxides, sulfur oxides, and hydrogen chloride.

As an example for increasing a content of methane in the first mixed gas, the first mixed gas may further include one or more selected from the group consisting of landfill gas, shale gas, refinery off-gas, and biogas. The landfill gas, shale gas, refinery off-gas, and biogas described above contain methane and carbon dioxide in an amount of 40 vol% or more, specifically 50 vol% or more. Accordingly, when the first mixed gas further includes the above-described gas, the production yield of syngas may be further improved through subsequent processes such as a methane reforming reaction and a reverse Boudouard reaction.

In an example, a C/O elemental ratio of the first mixed gas may have a lower limit of 0.01 or more, 0.05 or more, or 0.1 or more, and may have an upper limit of 0.9 or less, 0.8 or less, or 0.7 or less; specifically, the C/O elemental ratio may be 0.01 to 0.9, 0.05 to 0.8, and more specifically 0.1 to 0.7.

In the hydrocarbon production method according to the present disclosure, a methane reforming reaction may be smoothly performed even when the first mixed gas has a relatively high C/O elemental ratio within the above-described range. Specifically, as a circulation process described below is implemented using the catalyst used in the methane reforming reaction, the reaction may be continuously performed regardless of deactivation of the catalyst by coke that may be formed by dry reforming of methane.

In an example, the method may further include, after step (S1), a step of purifying the first mixed gas.

The first mixed gas produced by heat-treating organic waste may contain one or two or more impurities selected from the group consisting of tar, sulfur, nitrogen, and chlorine. Specifically, the first mixed gas may contain water-soluble impurities such as H₂S, HCl, HOCl, and NH₃, and water-insoluble impurities such as tar. Such impurities contained in the first mixed gas may induce deactivation of the catalyst and thus may reduce efficiency of subsequent processes. Accordingly, when impurities are removed from the first mixed gas to purify the first mixed gas, efficiency of the overall process may be improved.

Step (S2) is a step of producing a second mixed gas by steam-reforming methane contained in the first mixed gas in the first fluidized bed reactor. In step (S2), a reforming reaction according to the following Reaction Scheme 5 may be involved.

[Reaction Scheme 5] CH₄ + H₂O → CO + 3H₂ (steam reforming reaction)

The reforming reaction of step (S2) may be performed at a temperature of 600°C to 1,400°C, 600°C to 1,100°C, or 600°C to 800°C, at a pressure of 30 KPa to 2,000 KPa, 40 KPa to 1,000 KPa, or 50 KPa to 500 KPa, and at a gas hourly space velocity (GHSV) of 100 h-1 to 100,000 h⁻¹, 500 h⁻¹ to 10,000 h⁻¹, or 1,000 h⁻¹ to 5,000 h⁻¹.

By performing a steam reforming reaction using the porous catalyst for producing pyrolysis syngas of the present disclosure, hydrocarbons may be reformed with a high conversion even at a low temperature. Accordingly, the possibility that the catalyst may fracture due to expansion and contraction of the reactor caused by external heating may be significantly reduced, and thus the catalyst lifetime may be significantly increased.

Since step (S2) is performed in a fluidized-bed reactor, a circulation process may be implemented in which the catalyst used in the methane reforming reaction is introduced into a subsequent reverse Boudouard reaction process, regenerated, and then resupplied. As described below, since coke accumulated on the catalyst used in the steam reforming reaction serves as a carbon source for the reverse Boudouard reaction in step (S4), a circulation process of regenerating and resupplying the catalyst used in steps (S2) and (S4) may be performed, thereby enabling continuous reforming. In addition, when methane is reformed by using the steam reforming reaction, reforming reactivity is improved as compared with dry reforming, and there is also an effect of removing impurities such as chlorine.

Step (S3) is a step of separating the second mixed gas into a first stream containing carbon dioxide and a second stream containing hydrogen and carbon monoxide.

In an example, a method of separating the second mixed gas into the first stream and the second stream is not limited as long as it is a known method. However, in the present disclosure, separation may be performed using a carbon dioxide separation unit, and the carbon dioxide separation unit may be an amine scrubber. In general, an amine scrubber binds and removes carbon dioxide using an amine-based material, thereby separating components such as carbon dioxide and hydrogen sulfide from a gas vapor and recovering a gas containing hydrogen, carbon monoxide, or an inert gas. Accordingly, by using an amine scrubber, the first mixed gas may be separated into the first stream and the second stream.

In another example, the carbon dioxide separation unit may be a carbon capture and storage (CCS) unit. When a CCS unit is used for separating carbon dioxide, the CCS unit may adsorb and separate carbon dioxide by using an adsorbent containing one or two or more selected from calcium oxide, calcium hydroxide, dolomite, limestone, and trona. Accordingly, by using a carbon capture and storage (CCS) unit, the second mixed gas may be separated into the first stream and the second stream.

The first stream may contain carbon dioxide with a lower limit of 40 vol% or more, 50 vol% or more, or 60 vol% or more, and with an upper limit of 99 vol% or less, 90 vol% or less, 80 vol% or less, or 70 vol% or less. Specifically, the first stream may contain carbon dioxide in an amount of 40 vol% to 99 vol%, and more specifically 50 vol% to 80 vol%. In the carbon dioxide separation unit, when carbon dioxide is captured and then separated, in order to separate carbon dioxide at high purity, a regeneration column in which carbon dioxide is separated from an adsorbent material needs to be designed with a high number of stages, and thus more energy may be consumed. Accordingly, as the first stream contains carbon dioxide within the above-described range, the carbon dioxide separation process may be performed under milder conditions.

Step (S4) is a step of converting the first stream separated in step (S3) into carbon monoxide through a reverse Boudouard reaction in the second fluidized bed reactor. By additionally converting carbon dioxide contained in the first stream into carbon monoxide through the reverse Boudouard reaction, it is possible to prevent environmental pollution in terms of reducing carbon dioxide emissions, while maximizing a yield of syngas. The reverse Boudouard reaction may involve the following Reaction Scheme 6.

[Reaction Scheme 6] C + CO₂ → 2CO

In an example, a reverse Boudouard reaction catalyst of step (S4) may be the catalyst used in the steam reforming reaction of step (S2). The catalyst of the present disclosure may be used in the steam reforming reaction in step (S2), and coke may be deposited on the catalyst. When the coked catalyst formed by the steam reforming reaction is introduced into the second fluidized bed reactor to undergo the reverse Boudouard reaction, the coke may serve as a carbon source, thereby enabling the syngas production process to be continuously performed without a separate catalyst regeneration process.

The catalyst may be separated by a cyclone from the second syngas discharged from the first fluidized bed reactor, and the separated catalyst may be supplied, through a catalyst supply line, to the second fluidized bed reactor in which a reverse Boudouard reaction is performed. In the second fluidized bed reactor, the catalyst may be used in the reverse Boudouard reaction as a carbon source, thereby being regenerated, and the regenerated catalyst may be supplied back to the first fluidized bed reactor through a recirculation line. By using such a catalyst circulation process, a methane reforming reaction may be continuously performed without the need to externally supply a carbon source for the reverse Boudouard reaction, thereby enabling a cost-effective process.

That is, the present disclosure may maximize a yield of syngas through a methane reforming reaction and a reverse Boudouard reaction, and it is advantageous in that continuous operation with catalyst regeneration is enabled because a circulation process is implemented between the first fluidized bed reactor and the second fluidized bed reactor in which the methane reforming reaction and the reverse Boudouard reaction are performed.

In an embodiment, a reaction temperature in step (S4) may be 600°C to 1,400°C, 600°C to 1,200°C, or 600°C to 1,000°C, and a reaction pressure may be 30 KPa to 2,000 KPa, 40 KPa to 1,000 KPa, or 50 KPa to 500 KPa. In addition, in step (S4), a feed gas including the mixed gas and steam may be brought into contact with the porous catalyst for decomposing hydrocarbons according to the present disclosure under a condition in which a gas hourly space velocity (GHSV) is 100 h⁻¹ to 100,000 h⁻¹, 500 h⁻¹ to 10,000 h⁻¹, or 1,000 h⁻¹ to 5,000 h⁻¹. Under the above temperature, pressure, and gas hourly space velocity conditions, long-term operation is possible, and catalytic activity may be increased.

Step (S5) is a step of producing a third mixed gas by mixing the second stream separated in the carbon dioxide separation unit with carbon monoxide converted through the reverse Boudouard reaction in step (S4). The third mixed gas may contain hydrogen and carbon monoxide.

Step (S6) is a process of producing syngas by adjusting a ratio of carbon monoxide to hydrogen in the third mixed gas through a water-gas shift reaction. Through the water-gas shift reaction, the third mixed gas may be converted so as to satisfy a hydrogen-to-carbon monoxide ratio suitable for a subsequent catalytic reaction. The water-gas shift reaction may be represented by the following Chemical Formula 7.

[Chemical Formula 7] CO + H₂O → H₂ + CO₂

The water-gas shift reaction may be performed in the presence of a catalyst containing Fe and Cr. The water-gas shift reaction may be performed at a temperature of 100°C to 400°C, specifically 100°C to 300°C, and at a pressure of 20 bar to 80 bar, specifically 25 bar to 70 bar.

Syngas produced by the water-gas shift reaction may have a hydrogen-to-carbon monoxide ratio of 1.5 to 3:1, specifically 1.9 to 2.1:1. When the hydrogen-to-carbon monoxide ratio in the syngas satisfies the above-described range, a subsequent catalytic reaction process may be smoothly performed.

In an embodiment, the method may further include, after step (S6), (S7) producing hydrocarbons from the syngas through a catalytic reaction. Step (S7) is a step of converting the syngas produced in step (S6) into a hydrocarbon fraction, and the syngas may be converted into an appropriate hydrocarbon fraction by the catalytic reaction. The catalytic reaction is not limited as long as it is a reaction capable of converting syngas into a hydrocarbon fraction; specifically, the catalytic reaction may be a Fischer-Tropsch reaction.

In an example, when the catalytic reaction of step (S7) is a Fischer-Tropsch reaction, a reaction involving the following Chemical Formula 8 may be performed using the syngas produced in step (S6) as a feedstock.

[Chemical Formula 8] nCO + 2nH₂ → CₙH₂ₙ + nH₂O

The Fischer-Tropsch reaction may be performed in the presence of a catalyst containing cobalt, nickel, or iron; the catalyst may include, as a support, alumina, silica, titania, or the like, and a noble metal such as Pt, Ru, or Re may be used as a co-catalyst.

In addition, the Fischer-Tropsch reaction may be performed at a temperature of 100°C to 500°C or 200°C to 350°C and at a pressure of 10 atm to 50 atm or 10 atm to 30 atm; however, the present disclosure is not limited thereto.

Hereinafter, examples of the present disclosure will be further described with reference to specific experimental examples. The examples and comparative examples described in the experimental examples are merely illustrative of the present invention and do not limit the scope of the appended claims, it is obvious to those skilled in the art that various modifications and alterations may be made without departing from the spirit and scope of the present invention, and it is obvious that these modifications and alterations are within the appended claims.

(Preparation Example 1) Preparation of Ni/MgO/Al₂O₃ catalyst

A mixed solution was prepared by mixing 10 parts by weight of pseudo-boehmite alumina and 95 parts by weight of nickel nitrate hexahydrate, based on 100 parts by weight of water. 1 part by weight of formic acid was added to the mixed solution while stirring, and the mixture was reacted for 3 hours to induce gelation, thereby preparing a precursor gel. A solid mixture prepared by adding 30 parts by weight of clay and 1.5 parts by weight of an MgO oxide and mixing them using a homogenizer was mixed with the precursor gel; 10 parts by weight of colloidal silica (Ludox AS40, Aldrich) was added and 5 parts by weight of water was further added. The resulting mixture was vigorously stirred to prepare a composite catalyst sol. The composite catalyst sol was spray-dried and sieved to recover catalyst particles having a particle diameter of 50 to 250 µm. The recovered catalyst was dried in an oven at 120°C and calcined at 550°C for 3 hours to prepare a catalyst.

Characteristics of the catalyst prepared by the method of Preparation Example 1 were analyzed. An attrition index was measured using an attrition resistance measurement apparatus (3-hole attrition tester) in accordance with ASTM D 5757-95. A nickel content in the catalyst was calculated by X-ray fluorescence (XRF) spectrometry, and the XRF analysis was performed using an ARL QUANT'X manufactured by Thermo. A BET surface area, a total pore volume, and a pore size were measured by a nitrogen physical adsorption-desorption method using a TriStar 3000 instrument manufactured by Micromeritics.

It was confirmed that the catalyst of Preparation Example 1 had an attrition index of 3.5 wt%, indicating excellent attrition resistance. In addition, it was confirmed that the catalyst had a BET surface area of 79 m²/g, a total pore volume of 0.2 cc/g, and an average pore diameter of 34 Å. An average particle size was 131 µm, an average particle diameter (D50) was 126 µm, and fine particles of 50 µm or less were present in an amount of 4 wt%. As a result of the XRF analysis, it was confirmed that the Ni content in the catalyst was 30.1 wt%.

### (Example 1)

After 1,000 g of municipal solid waste was introduced into a pyrolysis reactor, steam was introduced under conditions of a temperature of 1,200°C and 250 kPa in the presence of alumina beads, and heat treatment was performed to recover a first mixed gas.

The first mixed gas was cooled, and impurities such as Cl, S, and N contained in the mixed gas were removed using a scrubber, thereby recovering a purified first mixed gas.

The first mixed gas from which the impurities were removed was supplied to the first fluidized bed reactor including the catalyst prepared in Preparation Example 1 at a space velocity of 2 L/g-cat/h, and steam was simultaneously supplied to perform steam reforming at 750°C, thereby producing a second mixed gas.

The second mixed gas was introduced into an amine scrubber, carbon dioxide in the second mixed gas was captured in the amine scrubber, and the second mixed gas from which carbon dioxide was separated was separated as a second stream. Specifically, the second mixed gas was introduced into a first amine scrubber, CO₂ was captured at 50°C in an aqueous solution (an amine solution) in which monoethanolamine (MEA) was dissolved, and gas not captured was recovered as the second stream. The amine solution containing CO₂ from the first amine scrubber was introduced into a second amine scrubber and separated into the amine solution and CO₂ at 100°C, and CO₂ was recovered as a first stream.

The recovered first stream was introduced into the second fluidized bed reactor and converted into carbon monoxide through a reverse Boudouard reaction. The reverse Boudouard reaction was performed in the second fluidized bed reactor filled with the catalyst of Preparation Example 1 that had been used in the steam reforming reaction, by supplying the first stream at a space velocity of 2 L/g-cat/h. In this case, as a carbon source, a deactivated catalyst on which coke was deposited by the steam reforming reaction was introduced, and the catalyst activated by removal of the coke was reintroduced into the first fluidized bed reactor.

The carbon monoxide converted from the first stream and the second stream were introduced into a gas mixing unit and mixed at 200°C to produce a third mixed gas. The third mixed gas was introduced into a syngas production unit, and syngas having an H₂-to-CO molar ratio of 1:2 was produced through a water-gas shift reaction.

Syngas was supplied to a hydrocarbon conversion unit, and, in the presence of a Co/ZnO (cobalt zinc oxide) catalyst at a gas hourly space velocity of 5,000 L/kg-cat/h, the feed rates were set so that a volume ratio of carbon monoxide:hydrogen:argon was 63.2:31.3:5.5, and a Fischer-Tropsch reaction was performed at 300°C and 10 bar for 60 hours, thereby recovering a hydrocarbon fraction.

As a result, the yield of syngas was 48%, and the yield of the hydrocarbon fraction using the syngas was 87%.

In addition, it was confirmed that, when continuous operation was performed 10 times according to the method of Example 1, the variation in yield was maintained within 5% without a decrease in catalytic activity, indicating excellent catalytic activity.

### (Example 2)

The procedure was performed in the same manner as in Example 1, except that landfill gas was mixed with the first mixed gas.

As a result, the yield of syngas was 48%, and the yield of the hydrocarbon fraction using the syngas was 86%. In addition, it was confirmed that, even after 10 consecutive reactions, the variation in yield was maintained within 5%, indicating that the catalyst has excellent stability.

### (Comparative Example 1)

The procedure was performed in the same manner as in Example 1, except that, in the steam reforming process and the reverse Boudouard reaction process, an Ni/Al₂O₃ catalyst in which 30 wt% of Ni was supported on alumina beads was used instead of the catalyst of Preparation Example 1.

As a result, the yield of syngas was the same at 48%, and the yield of the hydrocarbon fraction using the syngas was also at a similar level of 84% through the first three recycle runs; however, there was a problem with catalyst attrition from the first run, and a catalyst loss of about 15% occurred in each run. In particular, since nickel, which is an active metal, was supported only on the catalyst surface, nickel on the catalyst surface was rapidly lost as the process proceeded, resulting in a continuous decrease in catalytic activity.

When the third run was completed, the catalytic activity decreased by about 20%, indicating markedly lower durability and long-term stability compared to the porous catalyst for producing pyrolysis syngas of the present disclosure. After the reaction was completed, when the state of the catalyst was examined, agglomeration of the catalysts occurred, and many agglomerates in which a plurality of catalyst particles were bound together were observed. This suggests that sintering between nickel particles was induced by hot spots formed during the catalytic reaction process, and consequently the catalyst particles existed in an agglomerated form.

Through the above examples and comparative examples, it was confirmed that, when the catalyst prepared by the method of Preparation Example 1 was employed in the steam reforming and reverse Boudouard reactions, even after repeated operation performed 10 times or more, the yield of hydrocarbons was measured to be 86% or more without a decrease in catalytic activity due to loss of the catalyst and the active metal, thereby enabling long-term stable operation of the process with high efficiency. Accordingly, it was found that the porous catalyst for producing pyrolysis syngas of the present disclosure may achieve remarkably excellent syngas conversion and hydrocarbon production efficiency. In addition, it was found that, compared to a conventional catalyst, catalytic activity was maintained even during continuous reaction, indicating excellent durability.

The above description is provided merely as an example for illustrating the principles of the present disclosure, and other configurations may be included without departing from the scope of the present invention.

## Claims

1. A method for producing a porous catalyst for producing pyrolysis syngas, the method comprising:
preparing a mixed solution by mixing a metal precursor containing a Group VIIIA element, a ceramic support, and a solvent;
preparing a precursor gel by adding an acid to the mixed solution;
preparing a mixture by mixing clay with the precursor gel;
preparing a composite catalyst sol by adding an inorganic binder to the mixture; and
drying and calcining the composite catalyst sol.

2. The method of claim 1, wherein the catalyst is used as a steam reforming catalyst and a catalyst for a reverse Boudouard process in a syngas production process through hydrocarbon decomposition.

3. The method of claim 1, wherein the Group VIIIA element is a metal including nickel, iron, cobalt, ruthenium, palladium, platinum, or a mixture thereof.

4. The method of claim 1, wherein the metal precursor is one or more selected from the group consisting of a hydroxide, a sulfate, a carbonate, a nitrate, a chloride, benzoic acid, a basic carbonate, formic acid, citric acid, diammonium sulfate, and hydrates thereof of a Group VIIIA element.

5. The method of claim 1, wherein the ceramic support contains pseudo-boehmite.

6. The method of claim 1, wherein the acid is one or more selected from organic acids including formic acid, acetic acid, propionic acid, and salicylic acid.

7. The method of claim 1, wherein the calcining is performed at a temperature of 500°C to 1,300°C.

8. A porous catalyst for producing pyrolysis syngas, the porous catalyst being produced by the method of any one of claims 1 to 7.

9. The porous catalyst of claim 8, wherein the catalyst contains 5 to 70 wt% of a ceramic support, 0.1 to 75 wt% of a Group VIIIA element, and 0.1 to 30 wt% of clay.

10. The porous catalyst of claim 8, wherein the catalyst has a pore volume of 0.01 cc/g to 0.5 cc/g.

11. The porous catalyst of claim 8, wherein the catalyst has an average pore diameter of 300 Å or less.

12. The porous catalyst of claim 9, wherein the Group VIIIA element is present as fine particles, and the fine particles have an average particle diameter of 1 to 20 nm.

13. The porous catalyst of claim 8, wherein the catalyst has a BET specific surface area of 10 m²/g to 300 m²/g.

14. The porous catalyst of claim 8, wherein the catalyst has an attrition loss index of 15 wt% or less.

15. The porous catalyst of claim 8, wherein the catalyst further contains 0 to 30 wt% of silica.

16. The porous catalyst of claim 8, wherein the catalyst has an average particle diameter (D50) of 10 to 500 µm.

17. The porous catalyst of claim 8, wherein the catalyst is a catalyst for a steam reforming reaction and a reverse Boudouard reaction for producing syngas from hydrocarbons.
